# DEMANDE DE BREVET EUROPEEN

(11) **EP 4 125 182 A1**
(43) Date de publication de la demande: **01.02.2023**
(21) Numéro de dépôt: 22183480.7
(22) Date de dépôt: 07.07.2022
(51) Int. Cl.: H02K 1/14, H02K 3/52

(54) **MOTEUR ÉLECTRIQUE, STATOR POUR MOTEUR ÉLECTRIQUE ET PROCÉDÉ DE FABRICATION ASSOCIÉ**

(30) Priorité: 26.07.2021 FR 2108055
(71) Demandeur: Valeo Systèmes d'Essuyage, 78322 Le Mesnil Saint Denis (FR)
(72) Inventeur: HERRADA, Jose Luis, 78322 La Verriere (FR); BELHAJ, Mehdi, 78322 La Verriere (FR)
(74) Mandataire: Valeo Visibility

(57) **Abrégé**

La présente invention concerne un stator (3) pour moteur électrique (1) comprenant :
- une pluralité de dents séparées (17) comprenant un premier (17a) et un deuxième (17b) connecteurs,
- une pluralité de bobines (9) configurées pour être enroulées respectivement autour de la pluralité de dents séparées (17), une première extrémité du fil de bobinage étant configurée pour être positionnée dans le premier connecteur (17a) et une deuxième extrémité du fil de bobinage étant configurée pour être positionnée dans le deuxième connecteur (17b),
- un module central (7) configuré pour recevoir les dents séparées (17), ledit module central (7) comprenant des cadres de connexion (11) comprenant des pattes de connexion (11b) s'étendant radialement et configurées pour être insérées dans un premier (17a) ou un deuxième (17b) connecteurs d'une dent séparées (17), les cadres de connexion (11) étant configurés pour assurer des connexions électriques entre les bobines (9).

## Description

La présente invention concerne le domaine des moteurs électriques et notamment les moteur électriques destinés à équiper des vélos électriques.

Les vélos électriques sont de plus en plus populaires du fait de la facilité de déplacement qu'ils procurent tout en ayant une consommation énergétique, un impact environnemental et un coût de revient réduits.

Cependant, l'utilisation d'un moteur électrique dans un vélo électrique implique différentes contraintes. Il convient en particulier de fournir un couple important et une vitesse de rotation réduite de manière à permettre une assistance efficace tout en étant compatible avec la cadence de pédalage du cycliste.

Par ailleurs, le positionnement du moteur électrique sur le vélo, généralement au niveau du boîtier de pédalier du vélo implique des contraintes d'encombrement de manière à permettre l'intégration du moteur électrique sans compromettre d'autres caractéristiques du vélo. De plus, il convient de limiter le bruit produit par le moteur électrique.

Afin de répondre au mois partiellement à ces contraintes, la présente invention vise donc à fournir un moteur électrique ayant un encombrement réduit et pouvant produire un couple relativement important.

L'invention a donc pour objet un stator pour moteur électrique comprenant :
- une pluralité de dents séparées comprenant un premier et un deuxième connecteurs,
- une pluralité de bobines configurées pour être enroulées respectivement autour de la pluralité de dents séparées, une première extrémité du fil de bobinage étant configurée pour être positionnée dans le premier connecteur et une deuxième extrémité du fil de bobinage étant configurée pour être positionnée dans le deuxième connecteur,
- un module central configuré pour recevoir les dents séparées, ledit module central comprenant des cadres de connexion comprenant des pattes de connexion s'étendant radialement et configurées pour être insérées dans un premier ou un deuxième connecteurs d'une dent séparées, les cadres de connexion étant configurés pour assurer des connexions électriques entre les bobines.

L'utilisation d'un module central comprenant des cadres de connexion configurés pour connecter les bobines du stator et de dents séparées configurées pour venir se fixer sur le module central permet d'obtenir un stator facile et rapide à assembler ce qui permet une fabrication à grande échelle.

Selon un autre aspect de la présente invention, les cadres de connexion comprennent un anneau central à partir duquel s'étendent les pattes de connexion associées audit cadre de connexion.

Selon un autre aspect de la présente invention, les anneaux centraux des cadres de connexion sont superposés selon une direction axiale et sont séparés les uns des autres par des parois intermédiaires non conductrices électriquement du module central.

Selon un autre aspect de la présente invention, les parois intermédiaires sont réalisées en plastique.

Selon un autre aspect de la présente invention, le stator comprend également une culasse configurée pour être positionnée autour des dents séparées lorsque les dents séparées sont positionnées sur le module central.

Selon un autre aspect de la présente invention, les bobines sont connectées selon un montage en étoile ou en triangle.

Selon un autre aspect de la présente invention, les cadres de connexions sont configurés pour relier les bobines selon un bobinage à pas entier dans lequel les bobines d'une phase sont reliées en parallèle les unes par rapport aux autres. Selon un autre aspect de la présente invention, les cadres de connexion sont configurés pour relier les bobines selon un bobinage à pas fractionnaire dans lequel au moins certaines des bobines d'une phase sont reliées en série.

Selon un autre aspect de la présente invention, le module central comprend également des connecteurs additionnels configurés pour permettre l'alimentation des bobines par une alimentation externe.

La présente invention concerne également un moteur électrique comprenant un rotor et un stator tel que décrit précédemment.

Selon un autre aspect de la présente invention, le moteur électrique est un moteur triphasé sans balais et dans lequel le rotor comprend 10 ou 14 pôles. Un autre nombre de pôles est également possible.

La présente invention concerne également un procédé de fabrication d'un stator tel que décrit précédemment dans lequel le procédé comprend les étapes suivantes :
- une étape d'enroulement des bobines autour des dents séparées,
- une étape de positionnement des extrémités du fil de bobinage des bobines dans des premiers et deuxièmes connecteurs des dents séparées,
- une étape de connexion des dents séparées sur le module central de sorte que les pattes de connexion des cadres de connexion viennent s'insérer dans les premiers et deuxièmes connecteurs pour assurer la connexion entre les bobines et les cadres de connexion,
- une étape de positionnement d'une culasse autour des dents séparées.

Selon un autre aspect de la présente invention, l'étape d'enroulement comprend l'enroulement d'un fil de bobinage sur un bobineau pour former une bobine, l'ensemble comprenant le bobineau et le fil de bobinage formant une dent séparée configurée pour venir se positionner sur le corps de stator.

Selon un autre aspect de la présente invention, l'étape de connexion des dents séparées sur le module central comprend l'encliquetage des premiers et deuxièmes connecteurs sur les pattes de connexion.

D'autres caractéristiques et avantages de l'invention apparaîtront plus clairement à la lecture de la description suivante, donnée à titre d'exemple illustratif et non limitatif, et des dessins annexés parmi lesquels :
Figure 1 représente une vue schématique en perspective d'une partie d'un moteur électrique selon un premier mode de réalisation;
Figure 2 représente une vue schématique en perspective d'un module central d'un stator comprenant des cadres de connexion destinés à relier des bobines du stator;
Figure 3 représente un schéma électrique d'un bobinage standard en étoile pour un moteur électrique triphasé comprenant 15 bobines;
Figure 4 représente un schéma électrique d'un bobinage fractionnaire en étoile pour un moteur électrique triphasé comprenant 18 bobines ;
Figure 5 représente une vue en perspective d'un stator à dents séparées;
Figure 6 représente une vue agrandie d'une partie du stator de la figure 1 ;
Figure 7 représente une vue schématique en perspective d'une partie d'un stator selon une variante de réalisation; et
Figure 8 représente un organigramme des étapes d'un procédé de fabrication d'un stator.

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

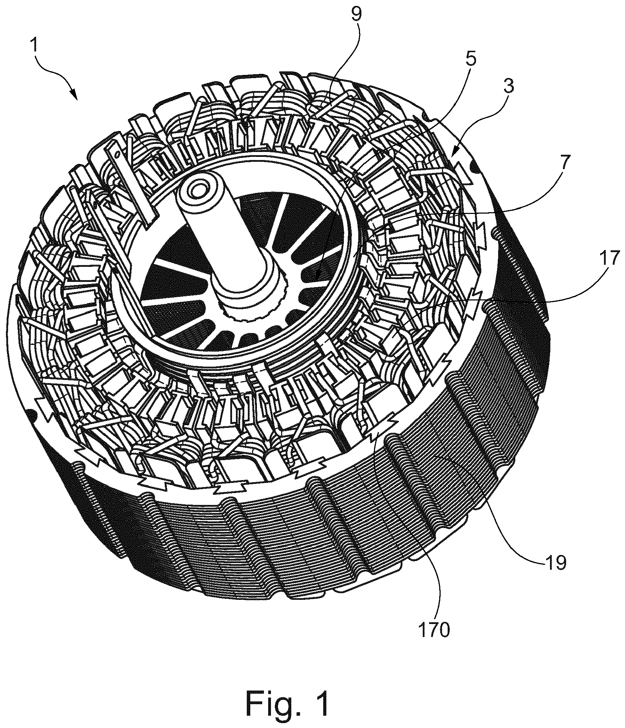

La figure 1 représente un schéma d'une partie d'un moteur électrique 1 comprenant un stator 3 et un rotor 5. Le moteur électrique 1 est par exemple un moteur électrique sans balais mais la présente invention ne se limite pas à ce type de moteur électrique.

Un tel moteur électrique 1 est particulièrement adapté pour être disposé dans un vélo électrique mais la présente invention ne se limite pas à cette application.

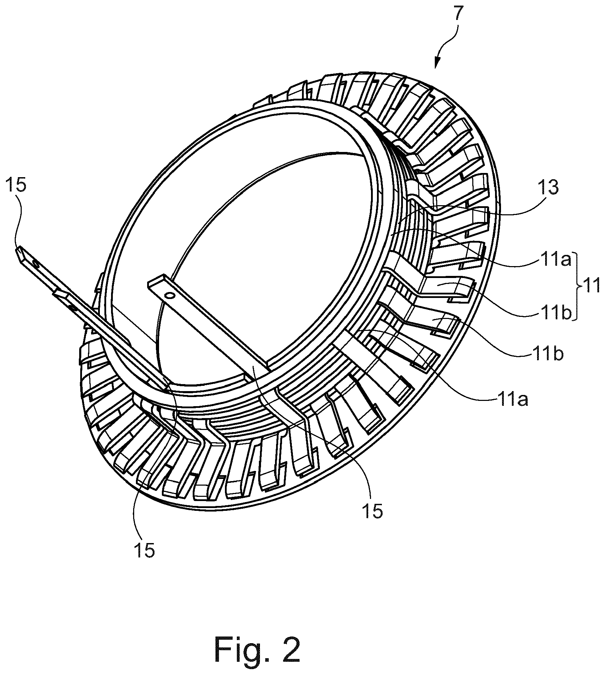

Le stator 3 comprend un module central 7 représenté sur la figure 2. Le module central 7 comprend des cadres de connexion 11 configurés pour connecter des bobines 9 destinées à venir se positionner autour du module central 7. Le module central 7 comprend par exemple quatre cadres de connexion 11 configurés pour relier les bobines 9 entre elles.

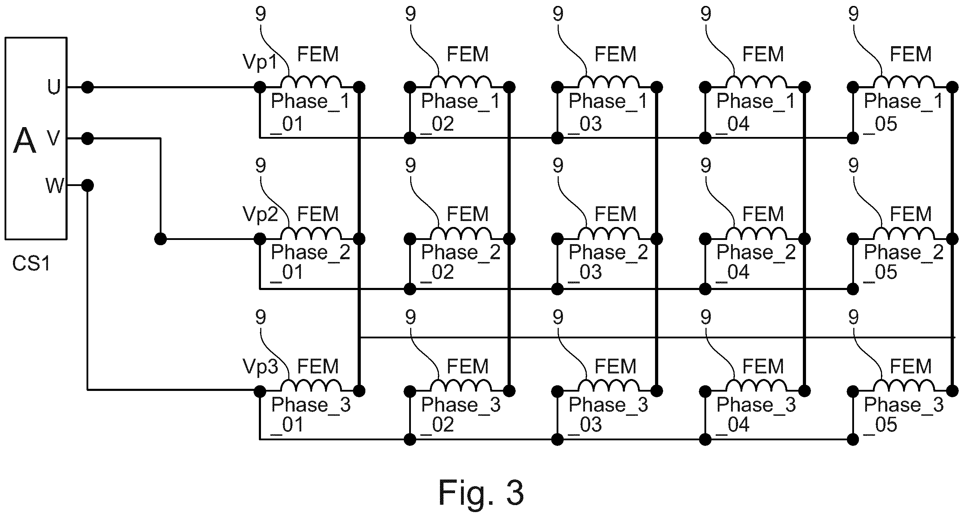

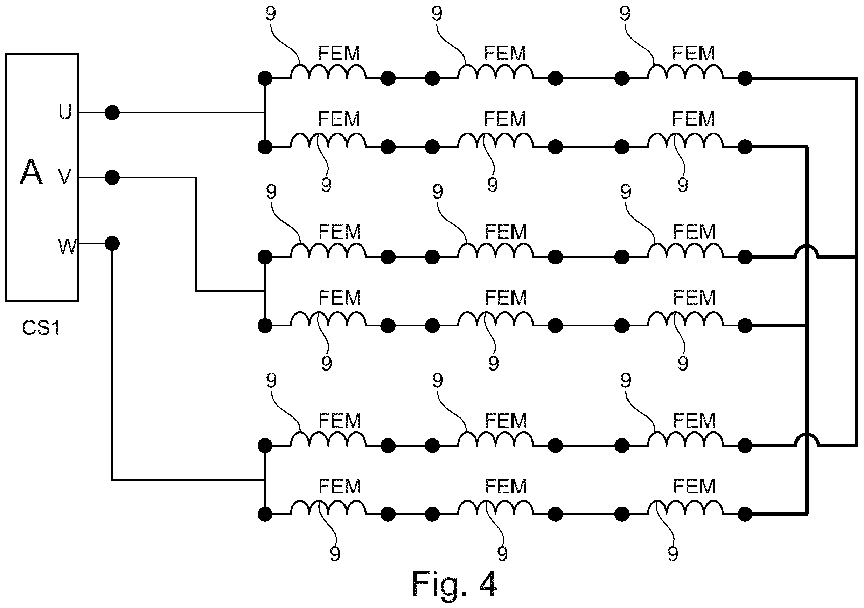

La figure 3 représente une première configuration électrique dans laquelle le stator 3 comprend 15 bobines 9, trois phases notées u, v, w et dans laquelle les bobines 9 sont connectées en étoile selon un bobinage standard à pas entier, c'est-à-dire un bobinage dans lequel les différentes bobines 9 d'une phase u, v, w sont disposées en parallèle. Un tel stator 3 peut être utilisé dans un moteur électrique 1 à 10 pôles. La figure 4 représente une deuxième configuration électrique dans laquelle le stator 3 comprend 18 bobines 9, trois phases notées u, v, w et dans laquelle les bobines 9 sont connectées en étoile selon un bobinage à pas fractionnaire, c'est-à-dire un bobinage dans lequel certaines bobines 9 d'une phase u, v, w sont disposées en série. Dans le cas présent, chaque phase u, v, w comprend deux branches de trois bobines 9 disposées en série, les deux branches étant disposées en parallèle. Le bobinage à pas fractionnaire permet d'avoir une transition plus amortie lors du passage des pôles du rotor 5 devant les dents du stator 3 et permet ainsi de réduire le bruit généré par le moteur électrique 1. Un tel stator 3 peut être utilisé dans un moteur électrique à 14 pôles.

De telles configurations permettent d'obtenir un couple important tout en limitant la taille du moteur électrique 1.

L'invention ne se limite pas aux deux configurations de bobinages présentées sur les figures 3 et 4 de sorte que d'autres configurations ayant un nombre de bobines 9 ou de bobines 9 en parallèle par phase u, v, w différent peuvent également être utilisées. Un bobinage du stator 3 en triangle et un rotor 5 ayant un nombre de pôles différent peuvent également être utilisés.

Ainsi, les cadres de connexion 11 permettent d'obtenir les liaisons voulues entre les bobines 9. Les cadres de connexion 11 comprennent par exemple un anneau central 11a à partir duquel s'étendent des pattes de connexion 11b associées audit cadre de connexion 11. Les anneaux centraux 11a sont par exemple superposés axialement et séparés les uns des autres par des parois intermédiaires 13 non conductrices électriquement pour éviter tout court-circuit entre les cadres de connexion 11. Les cadres de connexions 11 sont par exemple réalisés en métal, notamment en aluminium, laiton, cuivre ou fer, et les parois intermédiaires 13 sont par exemple réalisés en plastique.

Les pattes de connexion 11b s'étendent radialement à partir des anneaux centraux 11a et peuvent comprendre une première extrémité proximale en forme de S ou Z redressé, c'est-à-dire avec une barre de liaison s'étendant verticalement, pour rattraper la différence de hauteur axiale entre les différents anneaux centraux 11a et une deuxième extrémité distale configurée pour être reliée à une extrémité d'une bobine 9. Les pattes de connexion 11b des différents cadres de connexion 11 peuvent être réparties régulièrement autour des anneaux centraux 11a. Les pattes de connexion 11b adjacentes étant distantes les unes des autres pour éviter tout court-circuit entre les différents cadres de connexion 11.

Le module central 7 peut également comprendre des connecteurs additionnels 15, par exemple trois connecteurs additionnels 15, qui s'étendent axialement et qui sont configurés pour permettre l'alimentation des différentes phases u, v, w via une source d'alimentation extérieure au stator 3.

Le module central 7 est configuré pour recevoir des dents séparées 17 formées par des bobineaux autour desquels sont enroulés des fils de bobinage pour former les bobines 9. Une culasse 19 (visible sur la figure 1) de forme cylindrique est également configurée pour être positionnée autour des dents séparées 17. La culasse 19 comprend par exemple des rainures ou encoches axiales 190 configurées pour recevoir un embout 170 des dents séparées 17 pour permettre la fixation entre les dents séparées 17 et la culasse 19.

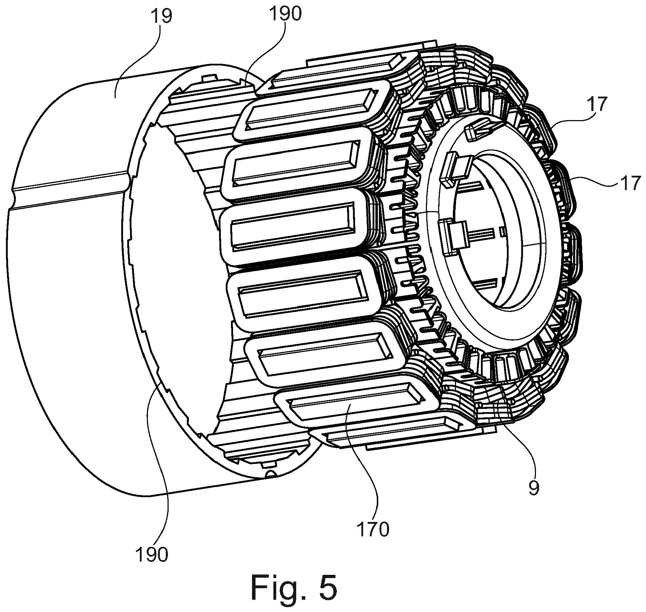

Les dents séparées 17 sont amovibles par rapport à la culasse 19. La figure 5 représente un exemple de stator 3 à dents séparées 17 dans lequel la culasse 19 comprend une pluralité d'encoches 190 s'étendant axialement sur le côté interne de la culasse 19. Dans le cas de la figure 5, le stator 3 comprend dix-huit dents séparées 17 mais un stator 3 comprenant un autre nombre de dents séparées 17, notamment quinze dents comme sur la figure 1, peut bien sûr être réalisé également. Les encoches 190 ont par exemple une section évasée ou en forme de T. Les dents 17 comprennent alors un embout de fixation 170 présentant une section de forme complémentaire aux encoches 190. L'embout de fixation 170 est destiné à être introduit dans une encoche 190 de la partie cylindrique 19 par translation de l'embout de fixation 170 dans l'encoche 190. La fixation des dents 17 est assurée par la complémentarité des formes de l'embout de fixation 170 et de l'encoche 190. L'utilisation d'un stator 3 à dents séparées 17 permet de réaliser l'enroulement des bobines 9 sur les bobineaux formant les dents 17 avant le positionnement des dents 35 sur la culasse 19 ce qui permet de réduire l'espace nécessaire entre les bobines 9, les bobines 9 pouvant ainsi être plus proches les unes des autres. Cela permet également le positionnement des dents sur le module central 7.

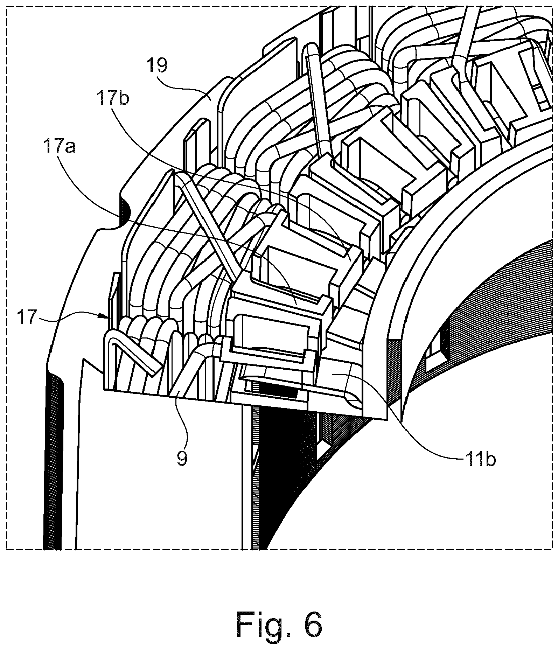

De plus, les dents séparées 17 du stator 3 comprennent un premier connecteur 17a et un deuxième connecteur 17b (visible sur la figure 6). Le premier connecteur 17a est configuré pour être relié à une première extrémité du fil de bobinage d'une bobine 9 et le deuxième connecteur 17b est configuré pour être relié à une deuxième extrémité du fil de bobinage d'une bobine 9. La fixation des extrémités du fil de bobinage dans les premier 17a et deuxième 17b connecteurs peuvent se faire par contact (le connecteur 17a, 17a comprenant par exemple un logement configuré pour recevoir le fil de bobinage comme dans le cas des connecteurs auto-dénudants. Alternativement, c'est la patte de connexion 11b qui peut comprendre un embout de type auto-dénudant configuré pour recevoir l'extrémité du fil de bobinage), par brasage ou par soudure. De plus, les premier 17a et deuxième 17b connecteurs sont configurés pour recevoir chacun l'extrémité distale d'une patte de connexion 11b lors de l'insertion des dents séparées sur le module central 7 et permettre ainsi la fixation de la dent sur le module central 7. La liaison se fait par exemple par encliquetage de la dent séparée 17 sur le module central 7 via les pattes de connexion 11b et les connecteurs 17a et 17b. Les premier 17a et deuxième 17b connecteurs comprennent par exemple deux formes en U en regard l'une de l'autre et formant une encoche configurée pour recevoir l'extrémité de la bobine 9. L'extrémité distale de la patte de connexion 11b est configurée pour venir en contact avec l'extrémité du fil de bobinage maintenu dans le connecteur 17a, 17b et permettre ainsi le contact entre l'extrémité de la bobine 9 et la patte de connexion 11b reçue par le connecteur 17a, 17b. Dans le cas des figures 1 et 6, les encoches des connecteurs 17a et 17b sont orientées radialement et les pattes de connexion 11b s'étendent de manière rectiligne pour venir en contact avec l'extrémité des bobines 9 disposée dans les encoches. Les pattes de connexion 11b forment ainsi une partie mâle configurée pour s'introduire dans une partie femelle complémentaire formée par les connecteurs 17a et 17b pour assurer une connexion mécanique et électrique entre les pattes de connexion 11b et les connecteurs 17a, 17b comprenant l'extrémité du fil de bobinage. Alternativement, la partie femelle de la liaison mécanique peut être portée par les pattes de connexion 11b et la partie mâle par les connecteurs 17a et 17b.

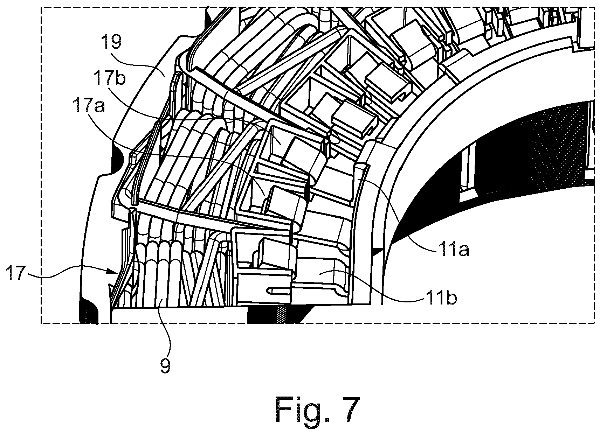

La figure 7 représente une variante de réalisation dans laquelle les connecteurs 17a et 17b comprennent une forme en U dont les branches comprennent chacune une encoche, l'extrémité de la bobine 9 s'étendant entre les deux encoches dans une direction tangentielle. Les pattes de connexion 11b présentent une extrémité distale en forme de C ou de S, le creux du S ou du C de la patte de connexion venant en contact avec l'extrémité de la bobine 9 qui s'étend entre les deux encoches du connecteur 17a, 17b.

Toute autre configuration des pattes de connexion et des connecteurs 17a et 17b permettant d'assurer le contact entre les extrémités du fil de bobinage et les cadres de connexion peut également être utilisé.

Comme représenté sur la figure 1, le stator 3 comprend une pluralité de dents séparées 17 cependant un nombre différents de dents séparées 17 peut être utilisé. Les dents séparées 17 peuvent présentées une section radiale en forme de H formant un bobineau configuré pour retenir les bobinages formant les bobines 9. Ainsi, une bobine 9 est formée sur chaque dent séparée 17 par un enroulement de spires d'un bobinage.

L'enroulement formant les bobines 33 comprend généralement une pluralité de spires adjacentes et s'étendant entre les extrémités radiales de la dent séparée 17. De plus, plusieurs couches de spires peuvent être superposées autour de la dent séparée 17. La présente invention concerne également un moteur électrique 1 comprenant un stator 3 tel que décrit précédemment. Le moteur électrique 1 comprend également un rotor 5 (visible sur la figure 1) configuré pour être positionné à l'intérieur du stator 3, c'est-à-dire en regard et au centre du module central 7 de sorte que le rotor est positionné à l'intérieur des dents séparées 17 comprenant les bobines 33. Le moteur électrique 1 est par exemple un moteur à courant continu triphasé sans balais et comprend par exemple 10 ou 14 pôles (dans le cas d'un moteur électrique 1 à 15 ou 18 bobines 9) mais d'autres types de moteurs électriques 1 ayant notamment un nombre de pôles différent peuvent également être utilisés. Les pôles sont par exemple réalisés par des aimants permanents disposés sur le rotor 5.

La présente invention concerne également un procédé de fabrication d'un stator 3 tel que décrit précédemment.

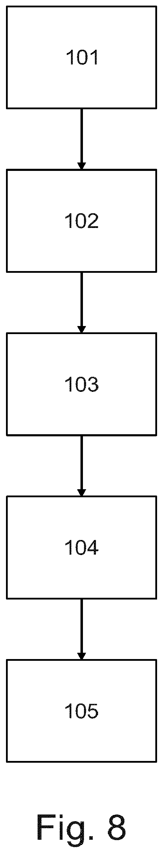

La figure 8 représente un organigramme des étapes du procédé de fabrication d'un tel stator 3.

La première étape 101 concerne l'enroulement du fil de bobinage des bobines 9 autour des dents séparées 17. Les dents séparées 17 ont par exemple une section en forme de H et forment un bobineau configuré pour retenir les spires des bobines 9. Les bobines 9 comprennent une pluralité de spires qui s'étendent entre les branches du H. Une bobine 9 peut comprendre plusieurs couches de spires superposées. L'enroulement est par exemple réalisé par un robot et les bobines 9 peuvent être toutes identiques.

La deuxième étape 102 concerne le positionnement d'une première extrémité du fil de bobinage des bobines 9 dans un premier connecteur 17a de la dent séparée 17 et d'une deuxième extrémité du fil de bobinage des bobines 9 dans un deuxième connecteur 17b de la dent séparée 17. Les connecteurs 17a, 17b comprennent par exemple une encoche dans laquelle vient se positionner l'extrémité du fil de bobinage. Le maintien des extrémités des fils de bobinage dans les connecteurs 17a , 17b peut être un maintien mécanique (comme dans un connecteur auto-dénudant), par brasage ou par soudure.

La troisième étape 103 concerne le positionnement d'un module central 7 comprenant les cadres de connexion au centre d'un corps de stator

La quatrième étape 104 concerne l'insertion des dents séparées 17 sur le module central 7 de sorte que les pattes de connexion 11b des cadres de connexion 11 viennent s'insérer dans les premiers 17a et deuxièmes 17b connecteurs pour assurer la connexion entre les bobines 9 et les cadres de connexion 11. Une patte de connexion 11b étant configurée pour venir en contact avec une extrémité du fil de bobinage d'une bobine 9 au niveau d'un premier connecteur 17a ou d'un deuxième connecteur 17b. La fixation se fait par exemple par encliquetage des dents séparées 17 sur le module central 7.

La cinquième étape 105 concerne le positionnement d'une culasse 19 autour des dent séparées 17. La culasse 19 venant se positionner sur les dents séparées 17 par translation axiale de sorte que les encoches 190 de la culasse reçoivent les embouts de fixation 170 des dents séparées.

Ainsi, l'utilisation d'un module central 7 comprenant les cadres de connexion 11 et de dents séparées 17 configurées pour venir se positionner sur le module central 7 et permettre la connexion entre les bobines 9 et les cadres de connexion 11 permet d'obtenir un stator 3 dont le montage est simple et rapide. De plus, la réalisation de cadres de connexion superposés selon une direction axiale et l'utilisation de dents séparées permettent de limiter la dimension radiale du stator 3.

## Revendications

1. Stator (3) pour moteur électrique (1) comprenant :
- une pluralité de dents séparées (17) comprenant un premier (17a) et un deuxième (17b) connecteurs,
- une pluralité de bobines (9) configurées pour être enroulées respectivement autour de la pluralité de dents séparées (17), une première extrémité du fil de bobinage étant configurée pour être positionnée dans le premier connecteur (17a) et une deuxième extrémité du fil de bobinage étant configurée pour être positionnée dans le deuxième connecteur (17b),
- un module central (7) configuré pour recevoir les dents séparées (17), ledit module central (7) comprenant des cadres de connexion (11) comprenant des pattes de connexion (11b) s'étendant radialement et configurées pour être insérées dans un premier (17a) ou un deuxième (17b) connecteurs d'une dent séparées (17), les cadres de connexion (11) étant configurés pour assurer des connexions électriques entre les bobines (9).

2. Stator (3) selon la revendication 1 dans lequel les cadres de connexion (11) comprennent un anneau central (11a) à partir duquel s'étendent les pattes de connexion (11b) associées audit cadre de connexion (11).

3. Stator (3) selon la revendication 1 ou 2 dans lequel les anneaux centraux (11a) des cadres de connexion (11) sont superposés selon une direction axiale et sont séparés les uns des autres par des parois intermédiaires (13) non conductrices électriquement du module central (7).

4. Stator (3) selon l'une des revendications précédentes comprenant également une culasse (19) configurée pour être positionnée autour des dents séparées (17) lorsque les dents séparées (17) sont positionnées sur le module central (7).

5. Stator (3) selon l'une des revendications précédentes dans lequel les cadres de connexions (11) sont configurés pour relier les bobines (9) selon un bobinage à pas entier dans lequel les bobines d'une phase (u, v, w) sont reliées en parallèle les unes par rapport aux autres.

6. Stator (3) selon l'une des revendications 1 à 3 dans lequel les cadres de connexion (11) sont configurés pour relier les bobines (9) selon un bobinage à pas fractionnaire dans lequel au moins certaines des bobines (9) d'une phase (u, v, w) sont reliées en série.

7. Moteur électrique (1) comprenant un rotor (5) et un stator (3) selon l'une des revendications précédentes.

8. Procédé de fabrication d'un stator (3) selon l'une des revendications 1 à 6 dans lequel le procédé comprend les étapes suivantes :
- une étape d'enroulement des bobines (9) autour des dents séparées (17),
- une étape de positionnement des extrémités du fil de bobinage des bobines (9) dans des premiers (17a) et deuxièmes (17b) connecteurs des dents séparées (17),
- une étape de connexion des dents séparées (17) sur le module central (7) de sorte que les pattes de connexion (11b) des cadres de connexion (11) viennent s'insérer dans les premiers (17a) et deuxièmes (17b) connecteurs pour assurer la connexion entre les bobines (9) et les cadres de connexion (11),
- une étape de positionnement d'une culasse (19) autour des dent séparées (17).

9. Procédé de fabrication selon la revendication précédente dans lequel l'étape d'enroulement comprend l'enroulement d'un fil de bobinage sur un bobineau pour former une bobine (9), l'ensemble comprenant le bobineau et le fil de bobinage formant un dent séparée (17) configurée pour venir se positionner sur le corps de stator (31).

10. Procédé de fabrication selon la revendication 8 ou 9 dans lequel l'étape de connexion des dents séparées (17) sur le module central (7) comprend l'encliquetage des premiers (17a) et deuxièmes (17b) connecteurs sur les pattes de connexion (11b).
